Europäisches Patentamt

European Patent Office

Office européen des brevets

(11) Numéro de publication: **0 094 005**
**A2**

# (12) DEMANDE DE BREVET EUROPEEN

(21) Numéro de dépôt: 83104347.6

(22) Date de dépôt: 03.05.83

(51) Int. Cl.³: **G 01 B 7/00**

(30) Priorité: 07.05.82 FR 8207947

(43) Date de publication de la demande: 16.11.83
**Bulletin 83/46**

(84) Etats contractants désignés: **AT BE CH DE FR GB IT LI LU NL SE**

(71) Demandeur: **ALSTHOM-ATLANTIQUE Société anonyme dite:, 38, Avenue Kléber, F-75784 Paris Cedex 16 (FR)**

(72) Inventeur: **Bigret, Roland, 22, rue J. Varnet, F-93700 Drancy (FR)**

(74) Mandataire: **Weinmiller, Jürgen et al, Zeppelinstrasse 63, D-8000 München 80 (DE)**

(54) **Dispositif de mesure des déplacements relatifs entre un rotor et un stator de machine tournante.**

(57) Dispositif de mesure des déplacements relatifs entre un rotor (1) et un stator (2) de machine tournante dans une direction perpendiculaire à l'axe de rotation du rotor (1) comprenant un capteur (3) fixé au stator (2), un patin (4) frottant sur le rotor (1), une tige (5) appuyant radialement sur la patin (4) sous l'effet de moyens élastiques avec son extrémité disposée en face du capteur (3) de façon que celui-ci mesure l'entrefer qui le sépare de celle-ci.

Suppression des signaux parasites dus aux taches magnétiques et aux effets triboélectriques sur le rotor (1). Elimination de l'influence des défauts mécaniques locaux du rotor (1).

## Dispositif de mesure des déplacements relatifs entre un rotor et un stator de machine tournante

La présente invention a trait à un dispositif de mesure des déplacements relatifs entre un rotor et un stator de machine tournante dans une direction perpendiculaire à l'axe de rotation du rotor, comportant un capteur fixe par rapport au stator et fonctionnant par variation d'entrefer.

Dans les dispositifs connus, le capteur est disposé face au rotor et on mesure la distance d entre capteur et rotor.

La variation de cette distance résulte :
- d'une variation de la distance moyenne,
- d'une variation autour de la distance moyenne due aux vibrations,
- des défauts géométriques qui peuvent affecter la soie du rotor devant laquelle le capteur est disposé. Ces défauts sont en général très localisés.

Par ailleurs, des taches magnétiques et des effets triboélectriques sur le rotor peuvent affecter le signal délivré par le capteur, le bruit ainsi engendré peut être important et peut varier de sorte que même en effectuant des corrections on aboutit à une grande imprécision sur le résultat.

Le dispositif selon l'invention a pour but de supprimer l'influence des taches magnétiques présentes sur le rotor et des effets triboélectriques résultant de la rotation du rotor et d'éliminer en grande partie l'influence des défauts mécaniques locaux ce but est atteint par le dispositif tel que défini ci-dessus qui est caractérisé en ce qu'il comprend un patin frottant sur le rotor, une tige en matériau magnétique maintenue dans une direction perpendiculaire à l'axe de rotation du rotor par des moyens élastiques reliés au stator et appliquant sous l'effet desdits moyens élastiques le patin contre la périphérie du rotor, l'extrémité de la tige opposée au patin étant disposée en face du capteur de façon que celui-ci mesure l'entrefer qui le sépare de ladite extrémité.

Selon une réalisation particulièrement simple de l'invention, le capteur est disposé au moins en partie dans un boîtier dans lequel sont montés lesdits moyens élastiques, ledit boîtier étant fixe par rapport au stator.

L'intérieur du boîtier est de préférence climatisé, ce qui a pour effet d'améliorer la précision des résultats.

La présente invention sera mieux comprise à la lumière de la description qui va suivre dans laquelle :

- la figure 1 représente un dispositif de mesure connu,

- la figure 2 représente le dispositif de mesure selon l'invention,

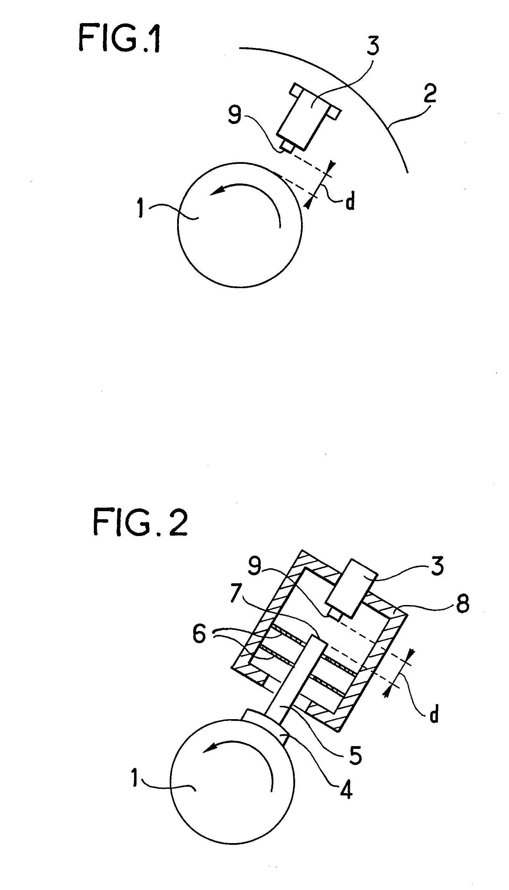

On a représenté sur la figure 1, un dispositif connu permettant de mesurer les déplacements relatifs d'un rotor 1 par rapport au stator associé 2 dans une direction perpendiculaire à l'axe de rotation du rotor 1.

Ce dispositif comporte un capteur 3 sensible aux variations d'entrefer fixé au stator 2 et dirigé radialement par rapport au rotor 1. Le capteur 1 fournit un signal dont l'amplitude est sensiblement proportionnelle à la distance d entre l'extrémité du capteur 3 et la périphérie du rotor 1 pour des fréquences comprises entre 0 et par exemple 10.000 Hz.

Le signal obtenu par le capteur peut être affecté par des taches magnétiques et triboélectriques sur le rotor et est influencé par les défauts géométriques de la partie du rotor devant laquelle le capteur 3 est placé.

Le dispositif selon l'invention représenté à la figure 2 comporte un patin en bronze 4 frottant sur la périphérie du rotor 1, une tige en fer 5 fixée au centre du patin 4 dans une direction perpendiculaire à l'axe de rotation du rotor 1. La tige 5 est maintenue dans cette position par des anneaux élastiques 6 qui poussent cette tige de façon à appliquer le patin 4 afin qu'il frotte sur le rotor 1.

Ces anneaux élastiques 6 ainsi que l'extrémité 7 de la tige opposée au patin 4 sont disposés dans un boîtier 8 qui comporte également l'extrémité sensible 9 du capteur 3.

Le capteur fournit donc un signal représentatif de la distance d entre l'extrémité sensible 9 et l'extrémité 8 de la tige 5 opposée au patin 4.

Ce signal ne comporte bien évidemment plus les signaux parasites résultant des taches magnétiques et triboélectriques du rotor.

De plus avec une surface de patin suffisamment grande, on élimine l'influence des défauts mécaniques locaux.

Pour accroître la précision de la mesure, on peut refroidir le capteur 3 en faisant circuler de l'air comprimé dans le boîtier 8.

On choisira bien évidemment les anneaux élastiques de façon que la fréquence propre tige-anneaux soit située en dehors de la bande passante utile du capteur 3.

REVENDICATIONS

1/ Dispositif de mesure des déplacements relatifs entre un rotor (1) et un stator (2) de machine tournante dans une direction perpendiculaire à l'axe de rotation du rotor (1), comportant un capteur (3) fixe par rapport au stator (2) et fonctionnant par variation d'entrefer, caractérisé en ce qu'il comprend un patin (4) frottant sur le rotor (1), une tige (5) en matériau magnétique maintenue dans une direction perpendiculaire à l'axe de rotation du rotor (1) par des moyens élastiques (6) reliés au stator (2) et appliquant sous l'effet desdits moyens élastiques (6) le patin (4) contre la périphérie du rotor (1), l'extrémité (8) de la tige (5) opposée au patin (4) étant disposée en face du capteur (3) de façon que celui-ci mesure l'entrefer qui le sépare de ladite extrémité (8).

2/ Dispositif de mesure selon la revendication 1, caractérisé en ce que le capteur (3) est disposé au moins en partie dans un boîtier (8) dans lequel sont montés lesdits moyens élastiques (6), ledit boîtier (8) étant fixe par rapport au stator (2).

3/ Dispositif de mesure selon la revendication 2, caractérisé en ce que l'intérieur dudit boîtier (8) est refroidi.

FIG.1

FIG.2